# EUROPÄISCHE PATENTSCHRIFT

(11) **EP 3 470 599 B1**
(45) Veröffentlichungstag und Bekanntmachung des Hinweises auf die Patenterteilung: **11.09.2019**
(21) Anmeldenummer: 17196384.6
(22) Anmeldetag: 13.10.2017
(51) Int. Cl.: E04F 13/10, E04F 13/08

(54) **OSB-PLATTE UND VERWENDUNG DERSELBIGEN**
OSB BOARD AND USE OF SAME
PANNEAU OSB ET SON UTILISATION

(43) Veröffentlichungstag der Anmeldung: 17.04.2019
(60) Teilanmeldung: 19190530.6
(73) Patentinhaber: SWISS KRONO Tec AG, 6004 Luzern (CH)
(72) Erfinder: SAUTER, Harald, 72461 Albstadt (DE)
(74) Vertreter: Maikowski & Ninnemann Patentanwälte Partnerschaft mbB

(56) Entgegenhaltungen:
- WO-A1-2004/053257
- WO-A1-2016/113721
- WO-A1-2017/013221
- US-A- 2 328 051
- US-A1- 2010 236 171

## Beschreibung

Grobspanplatten, auch OSB-Platten (Oriented Strand Board) genannt, sind Holzwerkstoffplatten, die aus langen schlanken Spänen (Strands) hergestellt werden. OSB-Platten werden zunehmend im Holz- und Fertighausbau eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt.

Die in den verschiedensten Bereichen im Innenausbau eingesetzten OSB-Platten, müssen beim Verlegen miteinander fixiert werden. Eine Fixierung wird zum Beispiel durch die Ausbildung von einer entlang einer Längs- und/oder Querkante vorgesehenen Nut und einer an der gegenüberliegenden Längs- und/oder Querkante ausgebildeten Feder bewirkt, wobei die Feder in die Nut eingreift (sog. Nut-Feder-Verbindung).

Bei diesen sogenannten Nut-Feder-Verbindungen handelt es sich um Verbindungen, die eine formschlüssige Verriegelung zum Beispiel von Bodenpaneelen bei einer schwimmenden Verlegung ermöglichen. Nut-Feder-Verbindungen greifen ineinander und lassen sich daher nur ineinanderschieben bzw. stecken. Hierdurch können in horizontaler Richtung Haltekräfte von einer Bodenplatte in eine damit verbundene benachbarte Bodenplatte übertragen werden und Unebenheiten im Boden ausgeglichen werden.

Eine vertikale Verlegung von OSB Platten zum Beispiel als Wandpaneele mit einer Nut-Feder-Verbindung ist allerdings für den Anwender mit einigem Kraftaufwand verbunden und somit unpraktisch.

Aus der WO 2017/013221 A1 sind Bodenpaneele bekannt, die im Wesentlichen einen modifizierten Falz aufweisen, der bei einer Verklebung eine gute Verbindung der Paneel Kanten ermöglicht und sich somit auch für eine schwimmende Verlegung für Fußböden eignet. Der hier vorgeschlagene Ansatz verwendet Paneel Kanten mit Kantenbrechungen, die eine Hinterschneidung der Paneele hervorrufen. Jedoch wären Paneele mit diesem Profileinsatz für eine Beplankung eines Ständerwerkes zur Herstellung einer Wand nicht geeignet, da auch hier ein höherer Kraftaufwand seitens der verlegenen Person notwendig ist.

In der DE 20 2014 105 181 U1 werden Wandplatten für den Trockenbau aus einem Holzwerkstoff verwendet, die an den Schmalseiten einen Stufenfalz aufweisen.

Zusätzlich ist es zur Vermeidung eines Auseinandertriftens der so miteinander verbundenen Platten und einer damit einhergehenden Spaltbildung an der Verbindungsstelle notwendig, die einzelnen OSB-Platten entweder zusätzlich miteinander zu verleimen oder durch Schrauben auf Balken oder Holzrahmenkonstruktionen zu fixieren. Dies ist insbesondere bei vertikalen Anwendungen erforderlich. So werden in der US 2010/02171 A1 Holzwerkstoffplatten mit einer Nut und einer Feder beschrieben, wobei in der Nut ein Leimschlauch vorgesehen sein kann. WO 2016/113721 A1 beschreibt ein Fußbodenpaneel zur Ausbildung von Fußbodenabdeckungen. Die Verbindung der Fußbodenpaneele kann mittels flacher Absatzkanten erfolgen, auf die jeweils ein Klebstoff aufgetragen werden kann.

Wie erwähnt können OSB Platten als Bauplatten, insbesondere in der Herstellung von Fertighäusern verwendet werden. Zum Beispiel wird für den Fall, dass OSB Platten für Wandkonstruktionen verwendet werden, die Wand aus einem soliden Holzrahmen mit entsprechenden Balken hergestellt, die von beiden Seiten mit OSB Platten abgedeckt sind. Der Zwischenraum zwischen den Rahmenelementen wird in geeigneter Weise isoliert.

Typischerweise wird die Seite der Konstruktionswand, die zur Innenseite des Hauses oder Gebäudes zeigt, mit einer Gipsbauplatte abgedeckt. Gipsbauplatten sind normalerweise jedoch sehr schwer (Dichte von über 1200 kg/m³) und erfordern Kenntnis und einigen Aufwand bei Anbringung. Die Oberfläche erfordert zudem das Aufbringen einer Gipsschicht und Spezialwerkzeuge sind für Schneidzwecke erforderlich.

Entsprechend besteht ein Bedürfnis nach alternativen bzw. dem Verzicht zu Gipsbauplatten für den Innenausbau von Gebäuden, welche in einfacher Weise herstellbar und miteinander verlegbar und direkt beschichtbar sind, und die Nachteile der konventionell verwendeten Gipsbauplatten überkommen.

Der vorliegenden Erfindung liegt daher die technische Aufgabe zugrunde, die angesprochenen Nachteile der bekannten Systeme zu beheben, und ein einfaches, aber effizientes Verfahren bereitzustellen, das dem Benutzer bzw. Verarbeiter eine einfache Verlegung von OSB Platten als Wand- oder Deckenpaneele ohne zusätzliche Kosten ermöglicht. Zudem soll die bereitgestellten OSB Platten eine Alternative zu den konventionell verwendeten Gipsbauplatten darstellen.

Die gestellte Aufgabe wird erfindungsgemäß durch eine OSB-Platte mit den Merkmalen des Anspruchs 1 gelöst.

Demnach wird eine OSB- Platte mit mindestens zwei sich einander gegenüberliegenden Plattenkanten, insbesondere zwei sich gegenüberliegenden Längskanten, bereitgestellt, wobei die Plattenoberseite der OSB-Platte mit mindestens einer Lage eines Kartonagepapiers versehen ist; wobei die Plattenkanten jeweils an der Plattenoberseite eine Abrundung mit einem Radius zwischen 3 und 10 mm aufweist; wobei jede der zwei sich gegenüberliegenden Plattenkanten einen Absatz in Form eines einfachen Falz aufweist, wobei der Falz in der einen Plattenkante komplementär zu dem Falz in der gegenüberliegenden Plattenkante ist, und wobei . auf mindestens einem der sich gegenüberliegende Absätze der Falze jeweils mindestens ein Leimschlauch (oder eine Leimschnur) vorgesehen ist. Bevorzugter Weise ist der mindestens eine Leimschlauch in mindestens einer in dem Falz vorgesehenen Nut angeordnet. Die Nut kann auch als Einlegekanal für den Leimschlauch bezeichnet werden.

Im Sinne der vorliegenden Erfindung ist unter einem Falz ein Absatz oder Fuge in einer Platte (oder allgemein in einem Körper) zu verstehen. Der Falz (bzw. Absatz) ist jeweils am Rand bzw. an der Kante der OSB Platte vorgesehen und ermöglicht eine flächige Aneinanderreihung der OSB Platten. Insbesondere bilden die an den gegenüberliegen Plattenkanten vorgesehenen, komplementären Falze im verbundenen Zustand miteinander eine stufenförmige Verbindung.

Ein einfacher Falz kann auch so beschrieben werden, dass in die Plattenkante ein gerader Absatz mit einer vorbestimmten Tiefe und Breite z.B. mittels Fräsen eingebracht wird. Entsprechend wird ein Absatz (oder Falz) gebildet, bei dem die Kante in einem Bereich der Platte mit einer vorbestimmten Breite hervorsteht und in einem anderen Bereich mit einer vorbestimmten Tiefe zurücksteht.

Im Falle von komplementären Falzen (oder Absätzen) steht der Falz in einer Plattenkante z.B. in einem unteren Bereich der Plattenkante hervor und in einem oberen Bereich zurück, wobei die gegenüberliegende Plattenkante einen komplementären Falz aufweist, der im oberen Bereich der Plattenkante hervorsteht und im unteren Bereich zurücksteht.

Beim Verlegen der OSB-Platten ermöglicht der erfindungsgemäße Falz ein einfaches Ablegen der OSB-Platten aufeinander. Aus diesem Grunde sind die erfindungsgemäßen OSB-Platten auch gut für eine Beplankung eines Ständerwerkes zur Herstellung einer Wand geeignet, im Gegensatz zu den Nut-Feder-Verbindungen, die sich nur ineinanderschieben bzw. stecken lassen.

In einer Ausführungsform der vorliegenden OSB-Platte beträgt die Breite des Falzes in den sich gegenüberliegenden Plattenkanten jeweils zwischen 20 und 40 mm, bevorzugt zwischen 25 und 35 mm, insbesondere bevorzugt 30 mm.

Die Falzbreite ist in den sich gegenüberliegenden Plattenkanten bevorzugt gleich. Es ist aber generell auch vorstellbar, dass die Falzbreite in den gegenüberliegenden Plattenkanten unterschiedlich ist.

In einer weiteren Ausführungsform der vorliegenden OSB-Platte entspricht die Tiefe des Falzes mindestens einem Drittel, bevorzugt mindestens der Hälfte der Dicke der OSB-Platte entspricht. Dabei kann die Dicke der OSB-Platte zwischen 9 und 50 mm, bevorzugt zwischen 10 und 25 mm, insbesondere bei 18 mm liegen. Entsprechend beträgt die Tiefe des Falzes für den Fall, dass die Falztiefe der Hälfte der Plattendicke entspricht, zwischen 4,5 und 25 mm, bevorzugt zwischen 5 und 12,5 mm, insbesondere 9 mm.

Der Falz wird mittels geeigneter Werkzeuge in die Platte eingebracht. Insbesondere erfolgt ein Fräsen und Abtragen der Holzplatte an den Kanten.

In einer Variante ist der Leimschlauch auf dem Falz durch Klebepunkte verliersicher befestigt. Die Öffnung des Leimschlauchs erfolgt durch das Zusammenpressen der Falzverbindung, insbesondere durch den Druck auf Grund zusätzlicher mechanischer Verbindungsmittel, wie Nägel, Klammern oder Schrauben. Die mechanischen Verbindungsmittel pressen die Falze zusammen und reichen auch bis in dahinter befindliches Ständerwerk. Der Leimschlauch kann perforiert ausgeführt sein und bildet in diesen Bereichen definierter Schwächung eine Sollbruchstelle für leichteres Öffnen aus.

Wie oben bereits ausgeführt, kann der Leimschlauch auch in eine Nut eingelegt sein und optional durch Klebepunkte verliersicher in der Nut befestigt sein.

In einer bevorzugten Ausführungsform ist diese Nut lediglich in einem Falz, insbesondere in dem unteren Falz vorgesehen; d.h. in der Falz die in der OSB-Platte vor dem Verlegen bzw. Verkleben für den Anwender in der Draufsicht erkennbar ist.

Es ist vorgesehen, dass die mindestens eine Nut für den mindestens einen Leimschlauch entlang der gesamten Länge der Plattenkante verläuft. Der Leimschlauch bzw. der im Leimschlauch enthaltende Leim dient zur Verklebung der Falze als Verbindungsstellen der OSB-Platten und zur Luftdichtheit an der Verbindung der jeweiligen OSB-Platten.

Es ist weiterhin vorgesehen, dass die mindestens eine Nut für den mindestens einen Leimschlauch mit einem Radius zwischen 1 und 5 mm, bevorzugt zwischen 2 und 4 mm, insbesondere bevorzugt 3 mm in die Oberfläche der Falz eingebracht ist. Dabei wird die Nut in die Oberfläche des Falzes eingefräst oder eingesägt, z.B. mittels eines Fräsers oder eines Sägeblattes mit der Form der einzubringenden Nut. Die Nut kann eine halbrunde Form oder auch eine flachere, ovale Form aufweisen. Im Falle einer ovalen Form der Nut wäre der Querschnitt des Leimschlauches ebenfalls oval ausgeführt.

Es wäre aber auch vorstellbar, dass eine Nut jeweils in sich gegenüberliegenden Falzen vorgesehen ist; d.h. sowohl in dem unteren als auch in dem komplementären oberen Falz.

Ist hingegen lediglich eine Nut in dem unteren Falz vorgesehen, kann der obere Falz glatt ausgeführt sein. Dies vereinfacht die Herstellung.

In einer weiteren Ausführungsform wäre es aber auch denkbar, dass auf dem oberen Falz ein erhabener Steg mit alternierenden symmetrischen Erhebungen vorgesehen ist, der komplementär zu der Nut im unteren Falz angeordnet ist. Die alternierenden symmetrischen Erhebungen bewirken bei einem Zusammenbringen bzw. Aufeinanderlegen von sich gegenüberliegenden Falzen aufgrund der dabei angewendeten Kräfte beziehungsweise des aufgebrachten Drucks ein Öffnen bzw. eine Zerstörung des in der Nut eingelegten Leimschlauches. Der Klebstoff wird freigesetzt und verteilt sich in dem Bereich des Falzes. In einer bevorzugten Ausführungsform weisen die Erhebungen beziehungsweise Erhöhungen auf dem mindestens einen Falz eine jeweils von der Holzwerkstoffplatte wegweisende spitzförmig zulaufende Geometrie auf. Dabei sind die Seiten der jeweiligen Erhebung bevorzugter Weise jeweils gleich lang. Die Höhe und Winkelabmessungen zwischen den Seiten der bevorzugt spitzförmig zu laufenden Erhebungen können je nach Plattenstärke und Falzgeometrie variiert werden. So können die Winkelabmessungen des inneren Winkels der spitzförmig zu laufenden Erhebung variieren, wobei ein kleiner innerer Winkel eine spitzere Erhebung bedeutet. Die Winkelgröße sollte abhängig sein von dem für dem Leimschlauch verwendeten Material und die für die Öffnung des Leimschlauches aufzubringende Kraft bzw. Druck Wird zum Beispiel ein festeres Material für den Leimschlauch verwendet, so sollte die Erhebung relativ spitzwinklig ausfallen, um ein Öffnen des Leimschlauches zu ermöglichen. Im umgekehrten Falle kann bei der Verwendung eines weicheren Materials für den Leimschlauch eine weniger spitze Erhebung ausreichend zum Öffnen des Leimschlauches sein. Die Erhebungen können eine Höhe von 1 bis 5 mm, bevorzugt 2 bis 4 mm aufweisen.

Es ist insbesondere bevorzugt, wenn der mindestens eine Leimschlauch als durchgängiger Schlauch, zum Beispiel in Form eines extrudierten Schlauches, ausgebildet ist, der den Leim bzw. Klebstoff enthält.

In einer anderen Ausführungsform der vorliegenden OSB-Platte ist der mindestens eine Leimschlauch entlang seiner Länge in einzelne Segmente bzw. Kammern unterteilt. Die Segmente bzw. Kammern sind bevorzugt von gleicher Größe, das heißt weisen gleiche Volumina zur Aufnahme einer gleichen Menge an Klebstoff auf. Die Segmente bzw. Kammern können durch Schweißnähte oder sogenannte Siegelstellen z.B. mit einer Breite zwischen 1 und 3 mm, bevorzugt 2 mm gebildet werden. Auch ist eine Unterteilung des Schlauches in Segmente unter Verwendung von Perforationslinien möglich, wobei die Perforationslinien sich auf der Oberseite- und/oder der Unterseite des Leimschlauches befinden können

In einer Ausführungsform weist der Leimschlauch einen Durchmesser zwischen 3 und 10 mm, bevorzugt 5 und 9 mm auf. Die Länge eines einzelnen Segmentes des Leimschlauches kann zwischen 100 und 200 mm, bevorzugt zwischen 130 und 180 mm, insbesondere bevorzugt zwischen 150 und 170 mm betragen.

Die Verwendung eines Leimschlauches mit durch Siegelstellen voneinander getrennten Segmenten weist verschiedene Vorteile auf. So tritt bei Beschädigungen des Leimschlauches) während des Transports, der Lagerung oder der Verarbeitung bei einer Segmentierung lediglich der Klebstoff bzw. der Leim aus dem beschädigten Segment aus und entsprechend wird ein Leerlaufen des gesamten Leimschlauches verhindert. Des Weiteren ermöglicht eine Segmentierung des Leimschlauches auch die Verarbeitung von unterschiedlichen Formaten an Holzwerkstoffplatten, da diese im Format nur ein vielfaches der Einzelsegmentlänge der Leimschlauchsegmente entsprechen müssen (ein Trennen des Leimschlauches in der Siegelstelle ist problemlos möglich).

In einer weiteren Ausführungsform der vorliegen OSB-Platte besteht der Leimschlauch aus einem Kunststoffmaterial. Das Kunststoffmaterial sollte dabei so ausgewählt sein, dass es über eine bestimmte Festigkeit verfügt, so dass ein Aufreißen des Schlauches während der Herstellung und dem Transport der OSB-Platte vermieden wird, jedoch beim Verlegen der OSB-Platten geöffnet werden kann. Besonders bevorzugtes Kunststoffmaterial, das hier zum Einsatz kommt, ist Polyethylenterephthalat (PET), Polyamid (PA) und/oder Polyethylen (PE) oder eine Mischung davon. Es können aber auch beliebig andere Folien oder Verbundfolien zur Herstellung des Leimschlauches verwendet werden. Im Falle der Verwendung einer Polyamidfolie als Schlauchmaterial weist diese eine Dicke bzw. Stärke zwischen 50 und 100 µm, bevorzugt zwischen 70 und 80 µm auf.

Der vorliegend zum Einsatz kommende Klebstoff ist ausgewählt aus der Gruppe enthaltend Polyvinyle und Acrylate. Als besonders vorteilhaft ist die Verwendung von wasserhaltigen Klebestoffformulierungen wie Polyvinylacetat (PVAC) oder Ethylenvinylacetat (EVA). Selbstverständlich können auch andere Leime mit Wasser als Lösemittel eingesetzt werden. In einer Ausführungsform kann als Klebstoff ein PVAC Leim mit einem Feststoffgehalt zwischen 50 und 80 Gew.%, bevorzugt zwischen 60 und 79 Gew.%, insbesondere bevorzugt von 65 Gew.% verwendet werden.

Es ist vorgesehen, dass die vorliegende OSB-Platte, die als Platte natürlicherweise eine Oberseite und eine Unterseite aufweist, die Plattenkanten jeweils an der Plattenoberseite eine Abrundung mit einem Radius zwischen 3 und 10 mm, bevorzugt zwischen 5 und 8 mm, insbesondere bevorzugt zwischen 6 und 7 mm aufweisen; d.h. die Plattenkanten weisen an dem hervorstehenden und/oder dem zurückstehenden Bereich der Falz eine entsprechende Abrundung auf. Bei Zusammenfügen der Platten bilden die Abrundungen im verbundenen Zustand miteinander eine Fuge der Oberfläche, die verspachtelt werden kann.

Es ist ebenfalls in einer Variante vorgesehen, dass die im Bereich der Falzverbindung von zwei OSB-Platten eine mechanische Verbindung bzw. Befestigung vorgesehen, die bevorzugt bis in den Ständer des Ständerwerkes reicht, auf welchen die OSB-Platte befestigt wird. Eine solche mechanische Befestigung kann mit Nägeln, Schrauben oder Klammern erfolgen. Eine Klammerung bzw. Klammer besteht aus zwei Nägeln, die miteinander verbunden sind. Das Eintreiben der Klammer in die Falzverbindung erfolgt mit einer pneumatischen Klammerpistole.

Das erfindungsgemäß in einer OSB-Platte vorgesehene Profil weist eine Vielzahl von Vorteilen auf: So wird durch die Art der Überdeckung und Verbindungsmöglichkeit eine statische Wirkung erreicht. Durch die Abrundung an der Profiloberfläche kann der Plattenstoß verspachtelt werden. Durch die Überblattung 50/50 kann die Platte am Stoß über beide Lagen geklammert werden (mind. 30% Einsparung der Klammern). Durch die Nut bzw. Einlegekanal für einen Leimschlauch in das Falzprofil wird eine selbstleimende und luftdichte Verbindung zwischen den OSB-Platten an der Verbindungsstelle erreicht. Es wird ein kraftschlüssiger Verbund für geschlossene Oberflächen bereitgestellt. Die OSB-Platten können mittels Schrauben oder Klammern an dafür vorgesehenen Rahmen befestigt werden, so dass geschoßhohe Formate realisiert werden können.

In einer weiteren, bevorzugten Ausführungsform der vorliegenden OSB-Platte ist die Oberfläche der OSB-Platte mit mindestens einer Lage eines Papieres versehen.

In einer Variante kann vorgesehen sein, dass eine erste Papierlage mit mindestens einem Harz, insbesondere einen Formaldehyd-Harz imprägniert ist. Bei dieser ersten Papierlage handelt es sich insbesondere um Papierlage, die direkt auf der OSB-Oberfläche angeordnet ist. Bei dem Formaldehyd-Harz handelt es sich insbesondere im ein Melamin-Formaldehyd-Harz, Urea-Formaldehyd-Harz, Melamin-Urea-Formaldehyd-Harz.

Das für die erste Papierlage verwendete Papier weist ein Flächengewicht zwischen 30 und 200 g/m², bevorzugt zwischen 50 und 150 g/m², insbesondere bevorzugt zwischen 80 und 120 g/m² auf.

In einer anderen Variante ist eine zweite Papierlage auf der ersten Papierlage vorgesehen, wobei zweite Papierlage bevorzugt aus einem rohen (d.h. unbehandelten, nicht imprägnierten) Papier besteht. Das Flächengewicht des Rohpapiers der zweiten Papierlage liegt zwischen 30 und 300 g/m², bevorzugt zwischen 50 und 250 g/m², insbesondere bevorzugt zwischen 100 und 120 g/m². Das Anordnen eines Rohpapiers als äußerste Schicht auf einer OSB-Platte ermöglicht die Bereitstellung eines Substrates, auf welchem direkt Innenwandfarbe, Spachtelmasse oder Klebstoff für Tapeten aufgebracht werden kann.

Es ist auch möglich, hydrophobe Komponenten als Schutz gegen Klimaeinflüsse oder einen dünnen Metallfilm zur Wärmereflexion auf die zweite Papierlage aufzubringen.

Das Kartonagepapier weist eine Dicke zwischen 0,5 und 5 mm, bevorzugt zwischen 1 und 4 mm, insbesondere bevorzugt zwischen 2 und 3 mm auf. In einer Variante kann die Dicke des Kartonagepapiers zwischen 0,8 und 2,6 mm, z.B. bei 1, 5 mm liegen.

Das Kartonagepapier wird bevorzugt vor der Einbringung des Falzprofils in die Plattenkanten auf die Oberfläche der OSB-Platte aufkaschiert. Beim Kaschieren von dickere Pappen bzw. Papierkartonagen wird ein Klebstrich auf die Oberseite der OSB aufgebracht und anschließend die Kartonage auf der Oberseite abgerollt. Sowohl OSB-Platte als auch die Kartonage bewegen sich durch die Kaschieranlage. Zwischen den Walzen wirkt zusätzlich ein linienförmiger Druck, durch den die Verbindung zwischen OSB-Platte und Kartonage unterstützt wird.

Es ist auch generell möglich und vorstellbar, dass das mindestens eine Kartonagepapier mit der OSB-Platte in einer Kurztaktpresse verpresst wird. In diesem Falle wird auf die Oberfläche der OSB-Platte zunächst ein beharztes Papier aufgebracht, auf welches das Kartonagepapier gelegt wird. Das Papier kann z.B. mit einem oder mehreren Harzen aus der Gruppe umfassend Melamin-Formaldehyd-Harz, Harnstoff-Melamin-Formaldehyd-Harz, Phenol-Melamin-Formaldehyd-Harz getränkt bzw. imprägniert sein. Durch das anschließende Verpressen z.B. in einer Kurztaktpresse bei erhöhten Temperaturen kommt es zu einem Anschmelzen des Harzes im beharzten Papier, welches als Adhäsionsmittel bzw. Klebstoff zwischen OSB-Oberfläche und Kartonagepapier wirkt.

Auch ist es möglich, dass mindestens ein Kartonagepapier direkt beim Herstellungsprozess der OSB-Platte auf die selbige aufzubringen. Dabei wird nach dem Aufbringen der OSB-Strands auf ein Transportband in der Reihenfolge untere Deckschicht - mittlere Deckschicht - obere Deckschicht das Kartonagepapier als Auflage online auf der oberen Deckschicht abgelegt und der gesamte Schichtaufbau unter Druck- und Temperatureinfluss verpresst.

Die Beschichtung bzw. Kaschierung von OSB-Oberflächen mit Kartonagepapier weist eine Vielzahl von Vorteilen auf: Durch einseitiges Aufbringen auf eine Plattenoberfläche wird eine glatte beschichtbare Oberfläche mit den Eigenschaften wie eine Gipsbauplatte oder Gipsfaserplatte bereitgestellt, die über die zusätzlichen Eigenschaften einer Holzplatte, wie sehr gute Befestigungsmöglichkeiten (z.B. mittels Schrauben oder Klammern) oder Spezialdübel verfügt. Eine derart modifizierte OSB-Platte kann als Finish-Oberfläche eingesetzt werden. Auch sind die modifizierten OSB-Platten statisch und luftdicht einsetzbar. Die vorliegende modifizierte OSB-Platte kommt insbesondere zur Herstellung von Wand- und/oder Deckenverkleidung zum Einsatz.

Hierfür kann die vorliegende OSB-Platte in verschiedenen Formaten verwendet werden.

In einem ersten Format werden OSB-Platten mit einer Länge zwischen 2000-5000 mm, bevorzugt 2500 mm, und einer Breite zwischen 600 -2800 mm, bevorzugt zwischen 625-2500 mm, und an den Längskanten mit dem erfindungsgemäßen Profil aus einfacher Falz und Leimschlauch bereitgestellt. Die Stirnseiten sind in diesem Format mit einem stumpfen Stoß (d.h. ohne Kantenbearbeitung) versehen. Dieses OSB-Plattenformat kommt insbesondere in Geschosshöhe zum Einsatz, wobei die Breite der Heißpresse und damit die maximale Breite der Platte der Höhe eines Geschosses (Etage) beim Bauen entsprechen. Somit deckt die Breite der OSB eine ganze Geschosshöhe (Etagenhöhe) ab. Dies erfolgt meist in solchen Bauten, in denen die tragende Struktur weitgehend durch ein Holzständerwerk realisiert wird - dieses Ständerwerk wird dann statisch aussteifend mit den hier in Rede stehenden OSB beplankt. Daher sind die OSB geschosshoch, wobei entlang der Geschoßhöhe die OSB-Platten einen stumpfen Stoß (d.h. ohne Falz) aufweisen. Die Falze sind dann an den OS-Platten vertikal zur Geschoßhöhe vorgesehen.

In einem zweiten Format werden OSB-Platten mit einer Länge zwischen 2000-3000 mm, bevorzugt 2500 mm, und einer Breite zwischen 500-1000 mm, bevorzugt 625 mm, und an den Längskanten mit dem erfindungsgemäßen Profil aus einfacher Falz und Leimschlauch bereitgestellt. Die Stirnseiten sind in diesem Format mit bekannter Nut- und Federprofilierung ausgeführt, wobei auch hier bevorzugt eine Abrundung der Plattenkanten vorgesehen ist. Dieses OSB-Plattenformat kommt insbesondere als Verlegeplatte zum Einsatz.

Die vorliegende OSB-Platte kommt ebenfalls in einem Verfahren zum Verbinden (oder Verlegen) von zwei oder mehreren OSB-Platten mit den folgenden Merkmalen zum Einsatz. In diesem Verfahren wird eine erste OSB-Platte mit den obigen Merkmalen mit einer anderen (zweiten) OSB-Platte mit den obigen Merkmalen verbunden, wobei der Falz der einen ersten OSB-Platte auf dem komplementären Falz der weiteren zweiten OSB-Platte gelegt und zusammen gepresst wird, wobei durch das Zusammenpressen der beiden OSB-Platten der in der Falz, und hier insbesondere in der Nut, vorgesehene Leimschlauch geöffnet und der Leim aus dem Leimschlauch freigesetzt wird.

Durch das Verbinden bzw. Verlegen der OSB-Platten kommt es zur Ausbildung einer Fuge zwischen den verlegten Platten, die anschließend in bekannter Weise verspachtelt werden kann.

Im Anschluss an das Verspachteln kann die Oberfläche in Analogie zu den konventionellen Gipsbauplatten weiter bearbeitet werden, z.B. Streichen, Tapezieren etc..

Die Erfindung wird nachfolgend unter Bezugnahme auf die Figuren der Zeichnungen Ausführungsbeispielen näher erläutert. Es zeigen:
- Figur 1: eine schematische Querschnittsansicht einer OSB-Platte gemäß einer ersten Ausführungsform der vorliegenden Erfindung;
- Figur 2: eine seitliche Draufsicht auf die in Figur 1 gezeigten Ansicht einer erfindungsgemäßen OSB-Platte,
- Figur 3A: eine Ansicht eines ersten Verlegeformats der erfindungsgemäßen OSB-Platte, und
- Figur 3B: eine Ansicht eines zweiten Verlegeformats der erfindungsgemäßen OSB-Platte.

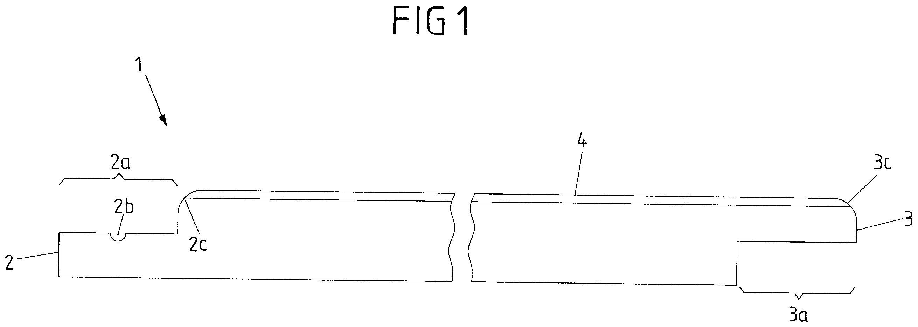

Figur 1 zeigt eine schematische Querschnittsansicht auf eine OSB-Platte 1 mit einer Breite zwischen 625-2800 mm, die an sich gegenüberliegenden Plattenkanten 2, 3 jeweils mit einem einfachen Falz 2a, 3a versehen sind, wobei beide Falze 2a, 3a komplementär zueinander ausgebildet sind.

Entsprechend steht der Falz 2a in der Plattenkante 2 in einem unteren Bereich der Plattenkante 2 hervor und in einem oberen Bereich zurück, wobei im Falle des komplementären Falzes 3a der obere Bereich der Plattenkante 3 hervorsteht und der untere Bereich zurücksteht.

Die Breite der beiden Falze 2a, 3a beträgt jeweils 30 mm. Die Tiefe der Falze entspricht jeweils Hälfte der Dicke der OSB-Platte; d.h. bei einer Plattendicke zwischen 9 und 40 mm beträgt die Falztiefe 4,5 bis 20 mm.

In die Oberfläche des Falzes 2a ist eine abgerundete Nut 2b als Einlegekanal für einen Leimschlauch bzw. Leimschnur vorgesehen. Die abgerundete Nut 2b weist einen Radius von 3 mm auf.

Auf die Oberseite der OSB-Platte 1 ist eine Lage eines Kartonagepapiers 4 mit einer Dicke zwischen 0,8-2,6 mm aufkaschiert.

Die Plattenkanten 2, 3 inklusive des Kartonagepapiers 4 sind zusätzlich abgerundet (Radius ca. 6 mm), wobei die Plattenkante 2 an dem zurückstehenden Bereich der Falz 2a die Abrundung 2c und die Plattenkante 3 an dem hervorstehenden Bereich der Falz 3a die entsprechende Abrundung 3c aufweisen. Bei Zusammenfügen der Platten bilden die Abrundungen im verbundenen Zustand miteinander eine Fuge der Oberfläche, die verspachtelt werden kann.

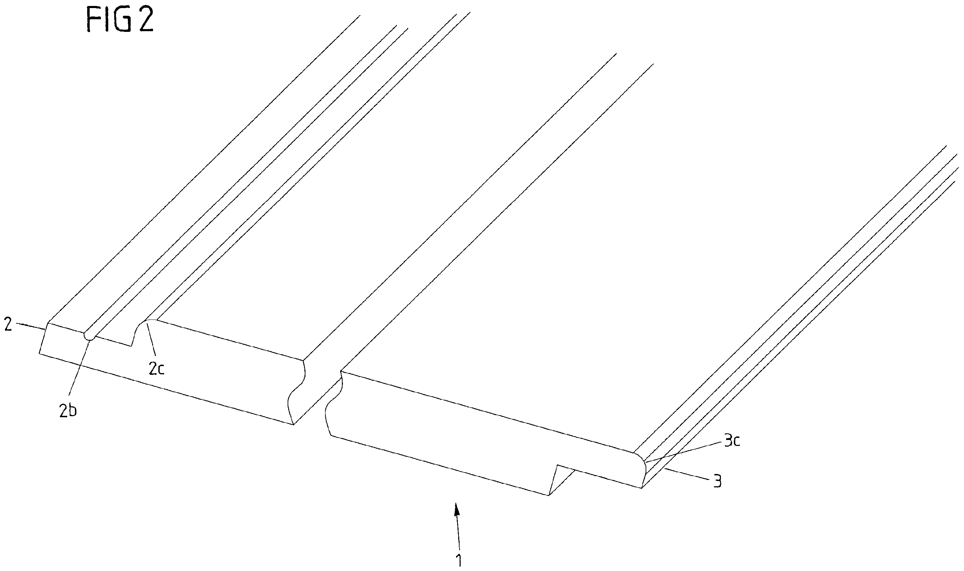

Figur 2 zeigt die Ausführungsform der Figur 1 in einer seitlichen, perspektivischen Draufsicht. Hierfür kann die vorliegende OSB-Platte in verschiedenen Formaten verwendet werden.

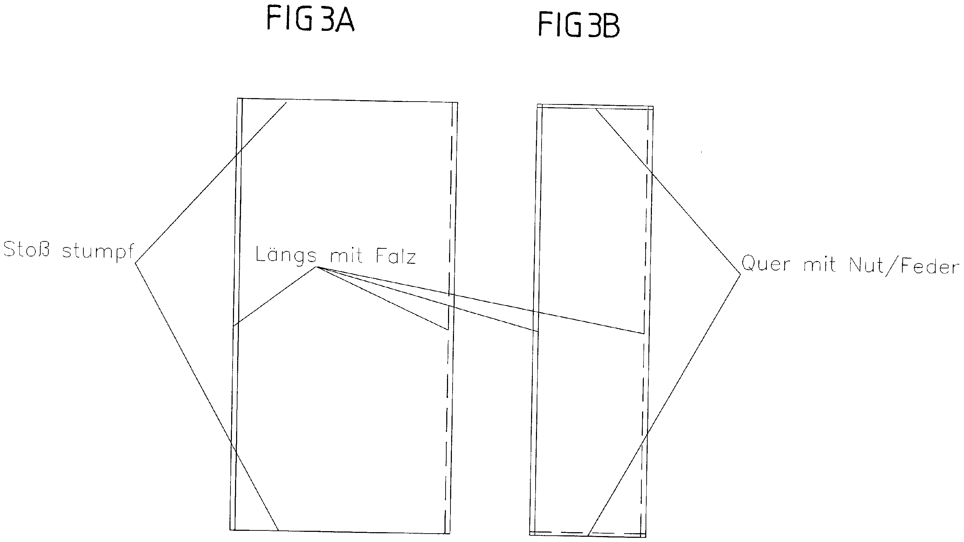

In Figuren 3A, 3B sind zwei Formatvarianten der vorliegenden OSB Platten gezeigt.

Gemäß einem ersten Format (Fig. 3A) wird eine OSB-Platte mit einer Länge von 2500 mm und einer Breite zwischen 625-2800 mm bereitgestellt, die an den Längskanten mit dem erfindungsgemäßen Profil aus einfacher Falz und Leimschlauch versehen ist. Die Stirnseiten sind in diesem Format mit einem stumpfen Stoß (d.h. ohne Kantenbearbeitung) versehen. Dieses OSB-Plattenformat kommt insbesondere als sog. Geschosshöhe zum Einsatz.

Gemäß einem zweiten Format (Fig. 3B) werden OSB-Platten mit einer Länge von 2500 mm und einer Breite von 675 mm bereitgestellt, die ebenfalls an den Längskanten mit dem erfindungsgemäßen Profil aus einfacher Falz und Leimschlauch versehen ist. Die Stirnseiten sind in diesem Format mit bekannter Nut- und Federprofilierung ausgeführt, wobei auch hier bevorzugt eine Abrundung der Plattenkanten vorgesehen ist. Dieses OSB-Plattenformat kommt insbesondere als Verlegeplatte zum Einsatz.

### Ausführungsbeispiel

Eine OSB/3 oder OSB/4 mit einer Dicke zwischen 9 bis 40 mm, einer Länge von 2500 mm und einer Breite von 1280 mm wird zunächst in einer Kaschieranlage mit einer Papierkartonage mit einer Dicke von 0,8-2,6 versehen. Es sei darauf hingewiesen, dass diese Formate lediglich beispielhafter Natur sind, und nicht als begrenzend anzusehen sind.

Anschließend wird in einer Fräsanlage entlang der beiden Längskanten ein einfacher Falz eingefügt. Die Falze haben jeweils eine Breite von 30 mm und eine Tiefe von 10 mm.

Die Plattenkanten werden abgerundet. Dies erfolgt in Nut- und Feder-Anlagen, die entsprechend mit Werkzeugen für diese oder jene Profilierung durch Umrüsten ausgestattet werden.

In den unteren Falz wird eine abgerundete Nut (Radius 3 mm) als Einlegekanal für eine Leimschnur mittels eines Fräsers eingebracht.

In die Nut ist ein Leimschlauch mit einem Durchmesser von 9 mm eingelegt, der aus abgeteilten Einzelsegmenten mit einer Länge von ca. 169 mm bestehen. Die für den Leimschlauch verwendete Polyamidfolie hat eine Stärke von 70 - 80 µm. Der Leimschlauch ist mit einem PVAC-Leim mit einem Feststoffgehalt von 65 Gew. % gefüllt. Zwischen den Segmenten befindet sich eine Siegelung mit einer Breite von ca. 2 mm.

## Patentansprüche

1. OSB- Platte (1) mit mindestens zwei einander gegenüberliegenden Plattenkanten (2, 3), insbesondere zwei sich gegenüberliegenden Längskanten,
wobei die Plattenoberseite der OSB-Platte mit mindestens einer Lage eines Kartonagepapiers (4) versehen ist;
wobei die Plattenkanten (2, 3) jeweils an der Plattenoberseite eine Abrundung (2c, 3c) mit einem Radius zwischen 3 und 10 mm aufweist;
wobei jede der zwei sich gegenüberliegenden Plattenkanten (2, 3) einen Absatz in Form eines einfachen Falz (2a, 3a) aufweist, wobei der Falz (2a, 3a) in der einen Plattenkante (2, 3) komplementär zu dem Falz in der gegenüberliegenden Plattenkante (2, 3) ist, und
wobei auf mindestens einem der sich gegenüberliegende Absätze der Falze jeweils mindestens ein Leimschlauch, insbesondere in mindestens einer Nut (2b), vorgesehen ist.

2. OSB-Platte nach Anspruch 1, **dadurch gekennzeichnet, dass** die Breite des Falzes (2a, 3a) in den sich gegenüberliegenden Plattenkanten (2, 3) jeweils zwischen 20 und 40 mm, bevorzugt zwischen 25 und 35 mm, insbesondere bevorzugt 30 mm beträgt.

3. OSB-Platte nach einem der vorhergehenden Ansprüche, **dadurch gekennzeichnet, dass** die Tiefe des Falzes (2a, 3a) mindestens einem Drittel, bevorzugt mindestens der Hälfte der Dicke der OSB-Platte (1) entspricht.

4. OSB-Platte nach einem der vorhergehenden Ansprüche, **dadurch gekennzeichnet, dass** die mindestens eine Nut (2b) für den mindestens einen Leimschlauch entlang der gesamten Länge der Plattenkante verläuft.

5. OSB-Platte nach einem der vorhergehenden Ansprüche, **dadurch gekennzeichnet, dass** die mindestens eine Nut für den mindestens einen Leimschlauch mit einem Radius zwischen 1 und 5 mm, bevorzugt zwischen 2 und 4 mm, insbesondere bevorzugt 3 mm in die Oberfläche der Falz eingebracht ist.

6. OSB-Platte nach einem der vorhergehenden Ansprüche, **dadurch gekennzeichnet, dass** der mindestens eine Leimschlauch ein durchgängiger Schlauch ist oder ein Schlauch ist, der entlang seiner Länge in einzelne Segmente unterteilt ist.

7. OSB-Platte nach einem der vorhergehenden Ansprüche, **dadurch gekennzeichnet, dass** die Plattenkanten (2, 3) jeweils an der Plattenoberseite eine Abrundung mit einem Radius zwischen 5 und 8 mm, insbesondere bevorzugt zwischen 6 und 7 mm aufweist.

8. OSB-Platte nach einem der vorhergehenden Ansprüche, **dadurch gekennzeichnet, dass** in den komplementären sich überlagernden Falzen (2a, 3a) der Plattenkanten eine Klammerung erfolgen kann.

9. OSB-Platte nach einem der vorhergehenden Ansprüche , **dadurch gekennzeichnet, dass** das Kartonagepapier (4) eine Dicke zwischen 0,5 und 5 mm, bevorzugt zwischen 1 und 4 mm, insbesondere bevorzugt zwischen 2 und 3 mm aufweist.

10. Verwendung einer OSB-Platte nach einem der vorhergehenden Ansprüche zur Herstellung von Wand- und/oder Deckenverkleidungen.

11. Verfahren zum Verbinden oder Verlegen einer ersten OSB-Platte nach einem der Ansprüche 1 - 9 mit einer weiteren zweiten OSB-Platte nach einem der Ansprüche 1 - 9, **dadurch gekennzeichnet, dass** die Falz der einen ersten OSB-Platte auf die komplementäre Falz der weiteren zweiten OSB-Platte gelegt wird und zusammen gepresst wird, wobei durch das Zusammenpressen der beiden OSB-Platten der in der jeweiligen Nut der Falz vorgesehene Leimschlauch geöffnet wird und der Leim aus dem Leimschlauch freigesetzt wird.

12. Verfahren nach Anspruch 11, **dadurch gekennzeichnet, dass** die durch das Verbinden der mindestens zwei OSB-Platten gebildete Fuge verspachtelt wird.

## Claims

1. OSB board (1) with at least two board edges (2, 3) lying opposite one another, in particular two opposite longitudinal edges,
wherein the upper side of the OSB board is provided with at least one layer of a cardboard paper (4);
wherein the board edges (2, 3) respectively on the upper side of the board have a rounding (2c, 3c) with a radius of between 3 and 10 mm,
wherein each of the two opposite board edges (2, 3) has an offset in form of a simple rebate (2a, 3a), the rebate (2a, 3a) in the one board edge (2, 3) complementing the rebate in the opposite board edge (2, 3), and
wherein at least one glue tube in each case is provided in at least one of the opposite offsets of the rebates, in particular in at least one groove (2b).

2. OSB board according to Claim 1, **characterized in that** the width of the rebate (2a, 3a) in the opposite board edges (2, 3) is respectively between 20 and 40 mm, preferably between 25 and 35 mm, particularly preferably 30 mm.

3. OSB board according to one of the preceding claims, **characterized in that** the depth of the rebate (2a, 3a) corresponds to at least a third, preferably at least half, of the thickness of the OSB board (1).

4. OSB board according to one of the preceding claims, **characterized in that** the at least one groove (2b) for the at least one glue tube runs along the entire length of the board edge.

5. OSB board according to one of the preceding claims, **characterized in that** the at least one groove for the at least one glue tube is introduced into the surface of the rebate with a radius of between 1 and 5 mm, preferably between 2 and 4 mm, particularly preferably 3 mm.

6. OSB board according to one of the preceding claims, **characterized in that** the at least one glue tube is a continuous tube or a tube that is divided along its length into individual segments.

7. OSB board according to one of the preceding claims, **characterized in that** the board edges (2, 3) respectively on the upper side of the board have a rounding with a radius of between 5 and 8 mm, particularly preferably between 6 and 7 mm.

8. OSB board according to one of the preceding claims, **characterized in that** a stapling can be performed in the complementing overlapping rebates (2a, 3a) of the board edges.

9. OSB board according to one of the preceding claims, **characterized in that** the cardboard paper (4) has a thickness of between 0.5 and 5 mm, preferably between 1 and 4 mm, particularly preferably between 2 and 3 mm.

10. Use of an OSB board according to one of the preceding claims for producing wall and/or ceiling panellings.

11. Method for connecting or laying a first OSB board according to one of Claims 1 - 9 with a further, second OSB board according to one of Claims 1 - 9, **characterized in that** the rebate of the first OSB board is placed onto the complementing rebate of the further, second OSB board and they are pressed together, the glue tube that is provided in the respective groove of the rebate being opened and the glue released from the glue tube, by the pressing together of the two OSB boards.

12. Method according to Claim 11, **characterized in that** the gap formed by the connecting of the at least two OSBs is filled.

## Revendications

1. Panneau OSB (1) avec au moins deux bords de panneau (2, 3) opposés l'un à l'autre, en particulier deux bords longitudinaux opposés,
dans lequel la face supérieure de panneau du panneau OSB est pourvue d'au moins une couche d'un carton (4) ;
dans lequel les bords de panneau (2, 3) présentent respectivement au niveau de la face supérieure de panneau un arrondi (2c, 3c) avec un rayon entre 3 et 10 mm ;
dans lequel chacun des deux bords de panneau (2, 3) opposés présente un épaulement sous forme d'une simple feuillure (2a, 3a), dans lequel la feuillure (2a, 3a) dans l'un des bords de panneau (2, 3) est complémentaire de la feuillure dans le bord de panneau (2, 3) opposé, et
dans lequel respectivement au moins un cordon de colle est prévu sur au moins un des épaulements opposés des feuillures, en particulier dans au moins une rainure (2b).

2. Panneau OSB selon la revendication 1, **caractérisé en ce que** la largeur de la feuillure (2a, 3a) dans les bords de panneau (2, 3) opposés est respectivement entre 20 et 40 mm, de préférence entre 25 et 35 mm, de manière particulièrement préférée de 30 mm.

3. Panneau OSB selon l'une quelconque des revendications précédentes, **caractérisé en ce que** la profondeur de la feuillure (2a, 3a) correspond à au moins un tiers, de préférence à au moins la moitié de l'épaisseur du panneau OSB (1).

4. Panneau OSB selon l'une quelconque des revendications précédentes, **caractérisé en ce que** l'au moins une rainure (2b) pour l'au moins un cordon de colle s'étend le long de toute la longueur du bord de panneau.

5. Panneau OSB selon l'une quelconque des revendications précédentes, **caractérisé en ce que** l'au moins une rainure pour l'au moins un cordon de colle est ménagée avec un rayon entre 1 et 5 mm, de préférence entre 2 et 4 mm, de manière particulièrement préférée de 3 mm, dans la surface de la feuillure.

6. Panneau OSB selon l'une quelconque des revendications précédentes, **caractérisé en ce que** l'au moins un cordon de colle est un cordon continu ou un cordon qui est divisé en différents segments le long de sa longueur.

7. Panneau OSB selon l'une quelconque des revendications précédentes, **caractérisé en ce que** les bords de panneau (2, 3) présentent respectivement au niveau de la face supérieure de panneau un arrondi avec un rayon entre 5 et 8 mm, de manière particulièrement préférée entre 6 et 7 mm.

8. Panneau OSB selon l'une quelconque des revendications précédentes, **caractérisé en ce qu'**un agrafage peut s'effectuer dans les feuillures (2a, 3a) complémentaires se chevauchant des bords de panneau.

9. Panneau OSB selon l'une quelconque des revendications précédentes, **caractérisé en ce que** le carton (4) présente une épaisseur entre 0,5 et 5 mm, de préférence entre 1 et 4 mm, de manière particulièrement préférée entre 2 et 3 mm.

10. Utilisation d'un panneau OSB selon l'une quelconque des revendications précédentes pour la fabrication de revêtements muraux et/ou de plafond.

11. Procédé d'assemblage ou de pose d'un premier panneau OSB selon l'une quelconque des revendications 1 à 9 avec un autre deuxième panneau OSB selon l'une quelconque des revendications 1 à 9, **caractérisé en ce que** la feuillure de l'un premier panneau OSB est posée sur la feuillure complémentaire de l'autre deuxième panneau OSB et pressée conjointement, dans lequel, du fait de la pression conjointe des deux panneaux OSB, le cordon de colle prévu dans la rainure respective de la feuillure est ouvert et la colle est libérée du cordon de colle.

12. Procédé selon la revendication 11, **caractérisé en ce que** le joint formé par l'assemblage des au moins deux panneaux OSB est colmaté.
